# FASCICULE DE BREVET EUROPEEN

(11) **EP 2 304 064 B1**
(45) Date de publication et mention de la délivrance du brevet: **26.04.2017**
(21) Numéro de dépôt: 09769503.5
(22) Date de dépôt: 29.05.2009
(51) Int. Cl.: C22B 7/00, C22B 7/02, C22B 19/30, C25C 1/16, C22B 3/08, C22B 3/10, C25B 1/16

(54) **PROCEDE DE TRAITEMENT ET DE VALORISATION DE COPRODUITS SIDERURGIQUES RICHES EN ZINC**
VERFAHREN ZUR VERARBEITUNG UND REZYKLIERUNG VON ZINKREICHEN NEBENPRODUKTEN DER EISENMETALLURGIE
METHOD FOR PROCESSING AND RECYCLING ZINC-RICH IRON METALLURGY SIDE PRODUCTS

(30) Priorité: 30.05.2008 FR 0853566
(43) Date de publication de la demande: 06.04.2011
(73) Titulaire: VB2M, 33000 Bordeaux (FR)
(72) Inventeur: MARCADIER, Eric, F-33000 Bordeaux (FR); RIZET, Laurent, F-74250 Viuz en Sallaz (FR); BOUCLIER, Valérie, F-74570 Thorens les Glières (FR)
(74) Mandataire: Aquinov
(86) Numéro de dépôt international: PCT/FR2009/051015
(87) Numéro de publication internationale: WO 2009/156662

(56) Documents cités:
- EP-A- 0 040 659
- WO-A-01/25497
- WO-A-2006/119611
- BE-A1- 894 733
- FR-A- 848 049
- LANGOVA ET AL: "Atmospheric leaching of steel-making wastes and the precipitation of goethite from the ferric sulphate solution" HYDROMETALLURGY, ELSEVIER SCIENTIFIC PUBLISHING CY. AMSTERDAM, NL, vol. 87, no. 3-4, 19 juin 2007 (2007-06-19), pages 157-162, XP022120194 ISSN: 0304-386X
- LECLERC N ET AL: "Hydrometallurgical extraction of zinc from zinc ferrites" HYDROMETALLURGY, ELSEVIER SCIENTIFIC PUBLISHING CY. AMSTERDAM, NL, vol. 70, no. 1-3, 1 juillet 2003 (2003-07-01), pages 175-183, XP004427444 ISSN: 0304-386X
- MAKKONEN H T ET AL: "Optimisation of steel plant recycling in Finland: dusts, scales and sludge" RESOURCES CONSERVATION AND RECYCLING, ELSEVIER SCIENCE PUBLISHER, AMSTERDAM, NL, vol. 35, no. 1-2, 1 avril 2002 (2002-04-01), pages 77-84, XP004343594 ISSN: 0921-3449

## Description

La présente invention concerne un procédé de traitement et de valorisation de coproduits sidérurgiques riches en zinc issus de hauts fourneaux connus aussi sous le vocable boues de hauts fourneaux BHF et des poussières d'aciéries électriques dites aussi PAE.

On sait que dans les hauts fourneaux, lors de la réduction du minerai par du coke afin d'obtenir de la fonte, et lors de la conversion de cette fonte en acier dans un convertisseur, il faut évacuer les gaz produits.

Comme ces gaz transportent des particules et/ou des poussières générées par les différents traitements thermiques liés à ces procédés sidérurgiques et qu'il n'est pas admissible de rejeter de tels gaz directement dans l'atmosphère, ces gaz sont épurés et généralement le traitement retenu est une épuration par lavage en phase aqueuse.

Le résultat est la formation de boues contenant des composés métalliques sous forme d'oxydes ou d'hydroxydes, provenant des charges initiales de ces hauts-fourneaux, c'est-à-dire du fer pour l'essentiel et des composés non ferreux comme le plomb et le zinc. Ces composés non ferreux sont des métaux lourds donc polluants et toxiques.

Ces boues ne peuvent donc être épandues dans la nature et ne peuvent pas être recyclées tel quel comme matière première dans les hauts-fourneaux dont elles proviennent. En effet, la teneur en métaux lourds et/ou en oxydes de métaux lourds affectent les propriétés métallurgiques de la fonte produite.

Dans le cas des hauts-fourneaux, les boues sont soit recyclées après agglomération si le taux de fer est suffisant soit placées en décharge avec tous les inconvénients que cela représente de coût, de pollutions éventuelles malgré les étanchéités prévues.

En effet, il faut surveiller ces lieux de stockage et les terrains correspondant sont immobilisés, ce qui représente également un coût.

Dans tous les cas le lagunage n'est qu'une solution d'attente car il faudra bien un jour traiter ces boues.

Pour donner un ordre d'idée, la quantité de boue produite est de l'ordre de 2 à 5 kilos de matière sèche par tonne de fonte produite suivant qu'il s'agit de fonte hématite ou phosphoreuse.

De même, les poussières d'aciéries électriques PAE sont issues du traitement en four électrique des ferrailles de récupération et destinées à être recyclées.

Ces poussières, elles non plus, ne peuvent être directement recyclées dans les fours malgré une forte teneur en fer. Les fours ne les acceptent pas car la forte teneur notamment en zinc perturbe leur fonctionnement. De plus, le zinc s'accumulerait au fur et à mesure et le taux deviendrait beaucoup trop élevé.

Le zinc est présent sous deux formes minéralogiques l'oxyde de zinc ZnO, connu sous le nom de Zincite en milieu naturel, et la ferrite de zinc ZnFe₂O₄, donc du zinc lié à des oxydes de fer, difficiles à traiter.

La quantité de poussières produites est importante de l'ordre de 15 à 20 kilos par tonne d'acier produite avec une teneur en Zinc de l'ordre de 20% à 40%.

Pour recycler ces PAE, on peut leur faire subir un traitement pyrométallurgique pour extraire le zinc sous ses différentes formes mais du fait de la présence d'autres oxydes il faut prévoir en aval un traitement hydrométallurgique, ce qui conduit à un traitement de recyclage peu valorisant.

Pour être admis dans un centre de stockage, il faut que les poussières subissent un traitement par lixiviation et que les produits issus de cette lixiviation conduisent à des résultats acceptables par rapport aux normes existantes et si ce n'est pas le cas, d'ailleurs dans la situation la plus courante, les PAE doivent être préalablement stabilisées, ce qui induit là encore des coûts.

Quant à attaquer les PAE directement par un procédé hydrométallurgique, ceci est tout à fait possible mais les procédés connus ne permettent pas la récupération du Zinc sous la forme de ferrite, ce qui conduit à des résidus de procédé hydrométallurgique trop chargés en Zinc.

Il est à noter que ces déchets BHF sont essentiellement ceux qui sont déjà stockés car les productions récentes de fonte dans les hauts-fourneaux utilisent des minerais pauvres en Zinc donc génèrent des BHF avec des taux de Zinc beaucoup plus limités de l'ordre de 3 à 4% difficiles à valoriser. De plus ces déchets sont alors beaucoup moins polluants et toxiques.

La réglementation prévoit d'interdire aux industriels le stockage de ces boues de hauts fourneaux et de ces poussières d'aciéries électriques et d'imposer leur traitement de dépollution et valorisation par recyclage.

Pour donner un ordre d'idées, les stocks français sont estimés à plus de 3 millions de tonnes pour les boues et le flux à 120 000 tonnes/an de poussières d'aciéries électriques soit près de 30 000 à 40 000 tonnes de zinc à récupérer.

Le procédé selon la présente invention concerne un traitement des boues de hauts-fourneaux, BHF, riches en Zinc, et des poussières d'aciéries électriques PAE également riches en Zinc. Ce procédé assure la récupération du Zinc sous toutes ses formes, permet de placer en centre de stockage pour déchets ultimes les résidus débarrassés des métaux lourds, est économiquement viable et permet de traiter les BHF stockées.

On connaît une demande de brevet européen EP 854 199 qui décrit un procédé de traitement de résidus métallurgiques par une voie basique plus particulièrement appliqué aux résidus de poussières d'aciérie électrique PAE. Ce procédé conduit à la récupération de zinc métal par électrolyse.

La demande de brevet européen EP 913 221 décrit un traitement d'une solution basique chargée en zinc électro déposé après une récupération par voie basique tel que celui décrit dans la demande de brevet EP 854 199 afin de le préparer pour obtenir une poudre métallique fluide de zinc.

Les poussières d'aciérie électrique ont fait l'objet de lignes de traitement par voie acide.

Néanmoins, il existe toujours un problème récurant celui de traiter les ferrites dans le cas des poussières d'aciéries électriques d'une part et celui de valoriser les résidus de boues de haut fourneaux au sein d'une même installation en réalisant des étapes et liaisons des lignes en synergie.

C'est le but de la présente invention qui propose un procédé de traitement de résidus métallurgiques issus de poussières d'aciéries électriques, PAE, contenant essentiellement du Fer et du Zinc sous forme d'oxyde de zinc et de ferrites de zinc, caractérisé en ce qu'il consiste à réaliser la succession des étapes suivantes :
- attaque acide d'une première quantité de PAE pour dissoudre le fer, les oxydes de zinc et casser les ferrites,
- filtration donnant un gâteau et un filtrat,
- ajout au filtrat d'une seconde quantité de PAE pour le neutraliser partiellement et provoquer la dissolution des oxydes de zinc et casser les ferrites de cette seconde quantité de PAE,
- cémentation du filtrat pour retirer les métaux autres que le zinc et le fer,
- précipitation du fer par augmentation du pH et séparation pour obtenir un gâteau,
- obtention d'une solution acide de zinc.

Le procédé est maintenant décrit en détail suivant un mode de réalisation particulier, à partir de BHF et de PAE ayant des compositions telles que mentionnées ci-dessous, pour les éléments essentiels et significatifs, objet du présent procédé.

| **Composés % Matière sèche** | **PAE** | **BHF** |
|---|---|---|
| Zn | 37,40* | 28,60** |
| Fe | 25,70 | 7,20 |
| Pb | 1,46 | 5,90 |

| | | |
|---|---|---|
| * : dont 87% sous forme de ZnO ** : dont 98% sous forme de ZnO | | |

Selon l'invention, le procédé de traitement en parallèle et synergique des BHF et des PAE présente l'avantage de compenser les défauts des deux traitements séparés.

L'invention est maintenant décrite en regard des dessins annexés sur lesquels les figures représentent :
- figure 1 : un schéma du procédé selon la présente invention associant de façon interactive les procédés de traitement des boues de haut-fourneaux et les poussières d'aciéries électriques,
- figure 2 : un schéma des circuits des eaux montrant une des synergies de traitement.

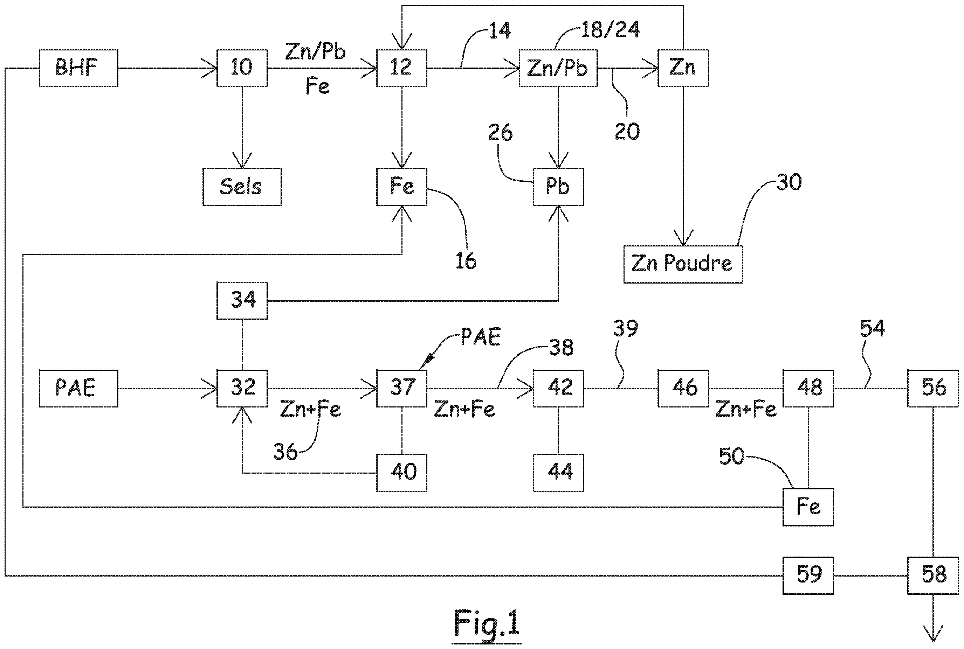

Les BHF, comme indiqué sur la figure 1, subissent une étape 10 de désalinisation pour extraire les sels sous forme de chlorure ou de sulfate du type NaCl, CaCl₂, CaSO₄, Na₂SO₄ par un lavage à l'eau avec un ajout de carbonate de sodium si nécessaire. Cette eau est ensuite neutralisée.

Compte tenu du taux de Zinc sous forme d'oxyde de zinc ZnO très supérieur à celui des ferrites ZnFe₂O₄, on opte pour une lixiviation ou attaque basique.

Ce traitement basique consiste à soumettre les BHF désalinisées à une attaque basique, à la soude, étape 12, afin de mettre en solution le Zinc et le Plomb.

De cette étape, on tire une solution 14 riche en Zinc et Plomb dissous et un résidu 16 comprenant pour l'essentiel le Fer dans son intégralité, ce Fer n'étant pas soluble en milieu basique, et un très faible pourcentage de zinc, plus particulièrement sous forme de ferrite ZnFe₂O₄. Ce résidu peut être aggloméré et réintégré dans un haut fourneau car ce résidu est très pauvre en métaux autres que le Fer.

La solution 14 riche en Zinc et en Plomb est soumise à une étape 18 de purification afin de séparer d'une part une solution 20 riche en Zinc et d'autre part un précipité 26 riche en Plomb.

Cette étape 18 de purification est un traitement 24 par cémentation, c'est-à-dire une réduction des cations métalliques par un autre métal tel que le zinc afin d'obtenir l'extraction du précipité 26 de plomb métal.

La solution 20 riche en Zinc subit une étape 28 d'électrolyse de façon connue afin de produire une poudre de zinc 30 directement commercialisable. La solution d'électrolyse est recyclée pour l'attaque basique.

Concernant les PAE, la voie retenue est un traitement acide.

Le traitement premier est donc une étape 32 d'attaque acide notamment avec de l'acide sulfurique H₂SO₄ à 20% et à chaud. Cette attaque permet en effet de dissocier les ferrites afin d'en récupérer le zinc d'une part et le fer d'autre part.

Pour débuter la mise en oeuvre, selon un exemple d'essai, on soumet 1 tonne de PAE à 10 m³ d'acide sulfurique à 20%.

La suspension est filtrée pour séparer le filtrat et un gâteau 34 contenant le plomb et une faible quantité de fer. Ce gâteau est associé aux résidus 26 de plomb issus du traitement basique après cémentation.

Le filtrat 36 contient le Zinc et le Fer, à plus de 99%, voire 99,9% pour le Zinc. La teneur est alors de 29g/l de Fer et de 42g/l de Zinc.

On ajoute à ce filtrat 36 qui est une solution acide à pH 0,0 des PAE brutes de l'ordre de 300 kg/m³, étape 37, qui contiennent de l'hydroxyde de Zinc, alcalin, pour remonter le pH. Pour donner un exemple le pH remonte de 0,0 à 1,5. Ceci a pour effet de maintenir le Zinc sous forme dissoute mais sans précipiter le Fer. Les oxydes de zinc sous forme ZnO des PAE ajoutées sont dissous si bien que le taux de Fer se maintient à 26g/l environ mais le taux de zinc monte à 147 g/l. Cette solution est à son tour filtrée pour séparer le filtrat 38 contenant le Zinc et le Fer et le gâteau 40 qui est ramené en tête du procédé.

En fonctionnement continu, ce second gâteau obtenu de l'ordre de 550 kg/tonne de PAE est ramené en tête de procédé, il suffit de 3m³ d'acide sulfurique pour casser les ferrites contenues dans ce gâteau puis de poursuivre les cycles.

Dans le mode de fonctionnement continu, on obtient un filtrat avec une moyenne de zinc de 100 g/l, le fer restant à sa valeur initiale aux environs de 29 g/l.

On augmente ainsi le rendement d'extraction du zinc initialement présent dans les PAE.

On constate dans ce procédé une économie d'acide puisque celui du filtrat est recyclé après retrait du Fer et du Zinc comme indiqué ci-après.

La solution acide, constituée du filtrat 38 contenant le Zinc et le Fer ayant été ainsi pré neutralisée, reste encore à des valeurs de pH de 1,5.

Ce filtrat subit une étape 42 de cémentation, c'est-à-dire une réduction par un autre métal des cations métalliques, présents en très petite quantité. Cette cémentation peut être avantageusement réalisée au Zinc. Ceci permet de retirer ces autres métaux 44 qui n'intéressent pas directement le présent procédé.

La solution acide du filtrat 39 après cémentation ne contient dès lors que du Fer et du Zinc et son pH est de l'ordre de 2,6 qu'il convient de ramener à 3,8 par dilution et/ou ajout de soude à l'étape 46 pour précipiter le Fer sous forme oxydée. Le Fer précipite sous différentes formes soit sous la forme d'un oxyde de type Ghoetite soit sous des formes simples, notamment hydroxyde et/ou sulfate de fer. La transformation en Ghoetite dépend de l'apport en oxygène soit par ajout d'eau oxygénée H₂O₂ soit par barbotage d'O₂.

La solution est alors filtrée à l'étape 48 pour isoler l'oxyde fer dans le précipité 50, de couleur orangée, retenu par le filtre, tandis que le filtrat 54 contient tout le Zinc, généralement de couleur jaune clair.

Le précipité 50 d'oxyde de fer est transféré pour l'associer avec le résidu 16 de Fer issu de l'attaque basique de l'étape 12 de façon à renforcer encore le taux de fer de ce résidu.

Une fois le fer retiré, la solution 54 voit son pH ramené à 9 par ajout d'une base, étape 56, et plus particulièrement par adjonction d'une base, notamment par ajout des eaux de lavage issues du traitement basique des BHF et/ou par ajout en complément, si nécessaire, d'une base du type carbonate de sodium Na₂CO₃. Le Zinc précipite et la solution est filtrée, étape 58 en sorte d'en tirer un gâteau 59 contenant quasiment que du Zinc.

Dans une première solution de valorisation, ce gâteau 59 de zinc précipité peut être alors adjoint en tête du procédé de traitement des BHF pour enrichir la solution de départ et obtenir en fin de parcours de la poudre de zinc parfaitement valorisable.

On note aussi qu'il y a d'autres voies de valorisation des produits issus du procédé selon la présente invention.

En effet, la solution 54 riche en zinc peut être directement transférée vers des bains d'électrozingage, avant précipitation.

Même si le procédé de traitement des PAE peut être utilisé seul et se trouve valorisé et valorisable en tant que tel, on constate en plus qu'il peut trouver un effet de synergie en combinaison avec un procédé de traitement basique des BHF tel que décrit ci-avant.

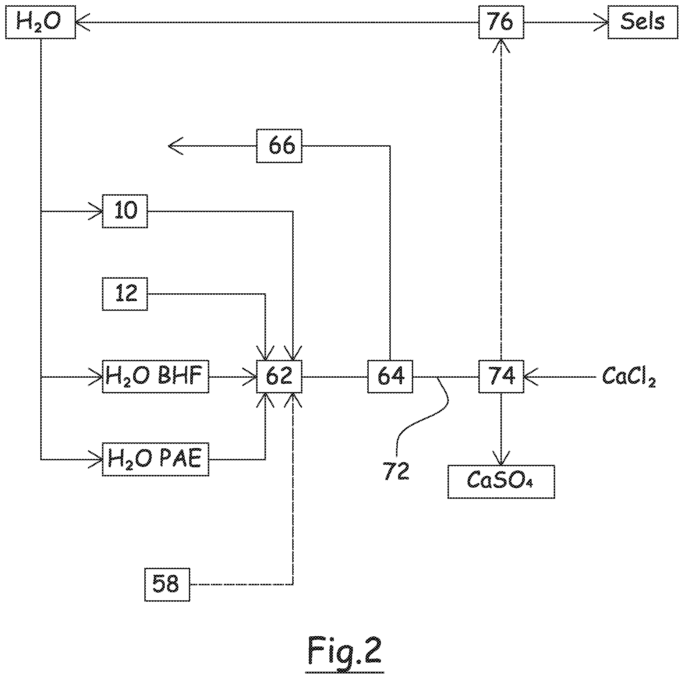

Sur la figure 2, on a représenté un schéma de circulation des eaux de traitement et de récupération de différents composés qui y sont véhiculés.

En effet, du fait du couplage d'un procédé par voie basique et d'un procédé par voie acide, on peut assurer une neutralisation réciproque des effluents en limitant la consommation des réactifs.

Les effluents proviennent de la désalinisation 10 et/ou de la purge éventuelle du traitement basique 12 et/ou des différents lavages des deux procédés basique et acide ainsi que éventuellement le filtrat après précipitation de l'étape de filtration 58.

Tous ces effluents sont regroupés au sein d'un bac 62 pour y être neutralisés suivant la réaction de neutralisation connue :

H₂SO₄ + 2NaOH → 2H₂O + Na₂SO₄

Le pH est ajusté à la valeur optimale de précipitation des métaux par un ajout de soude ou d'acide si nécessaire.

Après filtration, étape 64 en sortie du bac, on obtient d'une part un gâteau 66 contenant les hydroxydes métalliques qui pourront retourner en tête de procédé de traitement basique des BHF et d'autre part un filtrat 72 qui contient du chlorure de sodium NaCl et du sulfate de sodium Na₂5O₄.

On ajoute à ce filtrat du chlorure de calcium CaCl₂ à l'étape 74 afin de précipiter le gypse CaSO₄ selon la réaction connue :

Na₂SO₄ + CaCl₂ → 2NaCl + CaSO₄ (Gypse)

La solution comprend du chlorure de sodium NaCl de la réaction et du chlorure de calcium CaCl₂ en excès.

Cette solution traitée dans un évaporateur, étape 76, permet d'obtenir de l'eau claire recyclée et des sels qui peuvent être valorisés sous forme de fondant routier.

## Revendications

1. Procédé de traitement de résidus métallurgiques issus de poussières d'aciéries électriques, PAE, contenant essentiellement du Fer et du Zinc sous forme d'oxyde de zinc et de ferrites de zinc et de résidus métallurgiques issus de boues de hauts fourneaux, BHF, contenant essentiellement du Fer et du Zinc sous forme d'oxyde de zinc, **caractérisé en ce qu'**il consiste à réaliser la succession des étapes suivantes :
Etape A
- attaque acide d'une première quantité de PAE pour dissoudre le fer, les oxydes de zinc et casser les ferrites,
- filtration donnant un gâteau et un filtrat,
- ajout au filtrat d'une seconde quantité de PAE pour le neutraliser partiellement et provoquer la dissolution des oxydes de zinc et casser les ferrites de cette seconde quantité de PAE,
- cémentation du filtrat pour retirer les métaux autres que le zinc et le fer,
- précipitation du fer par augmentation du pH et séparation pour obtenir un gâteau,
- obtention d'une solution acide de zinc.
Etape B
- désalinisation des BHF par lavage à l'eau,
- attaque basique du gâteau pour obtenir d'une part une solution basique contenant du zinc et un gâteau contenant du fer,
- cémentation de la solution de façon à obtenir un gâteau contenant les métaux autres que le zinc et une solution contenant le zinc,
- traitement par électrolyse de la solution pour obtenir de la poudre de zinc.
Etape C
- introduction de la solution acide de zinc issue de l'attaque acide de PAE de l'étape A dans les BHF du traitement basique de l'étape B, en amont de l'attaque basique du gâteau, pour obtenir un précipité de sulfate de Fer,
- association du fer précipité lors de l'augmentation de pH après l'attaque acide des PAE et du fer après l'attaque basique des BHF,
- association des produits issus de cémentation après l'attaque acide des PAE et après l'attaque basique des BHF.

2. Procédé de traitement de résidus métallurgiques issus de poussières d'aciéries électriques, PAE, selon la revendication 1, **caractérisé en ce que** l'on ajoute lors de l'étape A, de l'oxygène lors de la précipitation du fer par augmentation du pH de façon à augmenter la formation d'oxyde fer de la forme Ghoetite.

3. Procédé de traitement de résidus métallurgiques selon la revendication 1, **caractérisé en ce que** l'on traite la solution acide de Zinc de l'étape A par électrolyse pour obtenir de la poudre de Zinc.

4. Procédé de traitement de résidus métallurgiques selon la revendication 1 ou 2, **caractérisé en ce que** l'on associe les eaux issues de la désalinisation, les purges du gâteau issues de l'attaque basique des BHF de l'étape B et des effluents de l'attaque acide des PAE de l'étape A, les eaux de lavage acide et les eaux de lavage basique pour les neutraliser en donnant du sulfate de sodium et du chlorure de sodium.

5. Procédé de traitement de résidus métallurgiques selon la revendication 4, **caractérisé en ce que** la solution de sulfate de sodium est attaquée au chlorure de calcium pour former du gypse et de l'eau contenant des sels.

6. Procédé de traitement de résidus métallurgiques selon la revendication 5, **caractérisé en ce que** l'eau contenant des sels est soumise à évaporation de façon à générer de l'eau propre ramenée en tête de procédé et des sels.

## Patentansprüche

1. Verfahren zur Verarbeitung von metallurgischen Resten, die aus Staub von Elektrostahlwerken hervorgehen, PAE, und im Wesentlichen Eisen oder Zink in der Gestalt von Zinkoxiden oder Zinkferriten enthalten, und zur Verarbeitung von metallurgischen Resten, die aus Hochofenschlamm hervorgehen, BHF, und im Wesentlichen Eisen und Zink in der Gestalt von Zinkoxid enthalten, **dadurch gekennzeichnet, dass** dieses darin besteht, die Abfolge der folgenden Verfahrensschritte auszuführen:
Verfahrensschritt A
- Einwirkung einer Säure auf eine erste Menge von PAE, um Eisen und die Zinkoxide aufzulösen und die Ferrite aufzubrechen,
- Filtrierung, die einen Kuchen und ein Filtrat ergibt,
- Hinzufügen einer zweiten Menge von PAE zum Filtrat um dieses teilweise zu neutralisieren und um die Auflösung der Zinkoxide und das Aufbrechen der Ferrite der zweiten Menge von PAE zu bewirken,
- Zementieren des Filtrats, um weitere Metalle außer Zink und Eisen zu entfernen,
- Fällung des Eisens durch eine Erhöhung des pH-Werts und eine Trennung, um einen Kuchen zu erzeugen,
- Erzeugen einer sauren Zinklösung.
Verfahrensschritt B
- Entsalzen von BHF durch Waschen mit Wasser,
- Einwirken einer Base auf den Kuchen, um einerseits eine basische Lösung zu erzeugen, die Zink enthält, und einen Kuchen zu erzeugen, der Eisen enthält,
- Zementieren der Lösung, um auf diese Weise einen Kuchen zu erzeugen, der weitere Metalle außer Zink enthält, und um eine Lösung zu erzeugen, die Zink enthält,
- Verarbeitung der Lösung durch Elektrolyse, um Zinkpulver zu erhalten.
Verfahrensschritt C
- Einführen der sauren Zinklösung, die im Verfahrensschritt A bei der Einwirkung der Säure auf PAE entsteht, in die BHF der basischen Behandlung des Verfahrensschritts B vor der Einwirkung einer Basis auf den Kuchen, um eine Ausfällung von Eisensulfat zu erhalten,
- Zusammenführen des Eisens, das bei der Erhöhung des pH-Werts nach der Einwirkung einer Säure auf PAE gefällt worden ist, und des Eisens nach der Einwirkung einer Basis auf BHF,
- Zusammenführen der Produkte, die sich aus dem Zementieren nach dem Einwirken einer Säure auf PAE und nach der Einwirkung einer Basis auf BHF ergeben.

2. Verfahren zur Verarbeitung von metallurgischen Resten, die aus Staub von Elektrostahlwerken hervorgehen, PAE, nach Anspruch 1, **dadurch gekennzeichnet, dass** bei dem Verfahrensschritt A Sauerstoff bei der Fällung von Eisen hinzugefügt wird, um den pH-Wert zu erhöhen, um auf diese Weise die Bildung von Eisenoxid in der Gestalt von zu verstärken.

3. Verfahren zur Verarbeitung von metallurgischen Resten nach Anspruch 1, **dadurch gekennzeichnet, dass** die saure Zinklösung des Verfahrensschritts A mit einer Elektrolyse verarbeitet wird, um ein Pulver zu erhalten.

4. Verfahren zur Verarbeitung von metallurgischen Resten nach Anspruch 1 oder 2, **dadurch gekennzeichnet, dass** das Wasser, das aus der Entsalzung hervorgeht, das Wasser aus dem Kuchen, das aus der Einwirkung einer Basis auf BHF im Verfahrensschritt B hervorgeht, die Abwässer der Einwirkung einer Säure auf PAE des Verfahrensschritts A, und die sauren und basischen Waschwässer zusammengeführt werden, um diese zu neutralisieren und Natriumsulfat und Natriumchlorid zu erzeugen.

5. Verfahren zur Verarbeitung von metallurgischen Resten nach Anspruch 4, **dadurch gekennzeichnet, dass** die Lösung von Natriumsulfat mit Calciumchlorid behandelt wird, um Gips und Wasser zu erzeugen, das Salze enthält.

6. Verfahren zur Verarbeitung von metallurgischen Resten nach Anspruch 5, **dadurch gekennzeichnet, dass** das Salze enthaltende Wasser einer Verdampfung unterzogen wird, um auf diese Weise sauberes Wasser, das zum Anfang des Verfahrens zurückgeführt wird, und Salze zu erhalten.

## Claims

1. A method for treating metallurgical residues issuing from electric steelwork dust, ESD, containing mainly iron and zinc in the form of zinc oxide and zinc ferrites, and metallurgical residues issuing from blast furnace sludge, BFS, containing mainly iron and zinc in the form of zinc oxide, **characterised in that** it comprises performing the succession of following steps:
Step A
- acid attack of a first quantity of ESD for dissolving the iron and zinc oxides and breaking down the ferrites,
- filtration giving a cake and a filtrate,
- adding to the filtrate a second quantity of the ESD in order to partially neutralise it and cause the dissolution of the zinc oxides and break down the ferrites of this second quantity of ESD,
- carburising of the filtrate in order to remove the metals other than zinc and iron,
- precipitation of the iron by increasing the pH and separation in order to obtain a cake,
- obtaining an acid solution of zinc.
Step B
- desalination of the BFS by washing with water,
- basic attack of the cake in order to obtain firstly a basic solution containing zinc and a cake containing iron,
- carburising of the solution so as to obtain a cake containing the metals other than zinc and a solution containing zinc,
- treatment of the solution by electrolysis in order to obtain zinc powder.
Step C
- introduction of the acid solution of zinc issuing from the acid attack of the ESD of step A in the BFS of the basic treatment of step B, upstream of the basic attack of the cake, in order to obtain a precipitate of iron sulphate,
- association of the iron precipitated during the increase in pH after the acid attack of the ESD and of the iron after the basic attack of the BFS,
- association of the products issuing from the carburising after the acid attack of the ESD and after the basic attack of the BFS.

2. A method for treating metallurgical residues issuing from electric steelwork dust, ESD, according to claim 1, **characterised in that**, during step A, oxygen is added during the precipitation of the iron by increasing the pH so as to increase the formation of iron oxide of the goethite form.

3. A method for treating metallurgical residues according to claim 1, **characterised in that** the acid solution of zinc of step A is treated by electrolysis in order to obtain zinc powder.

4. A method for treating metallurgical residues according to claim 1 or claim 2, **characterised in that** the water issuing from the desalination, the drainage of the cake issuing from the basic attack of the BFS of step B and the effluent from the acid attack of the ESD of step A, the acidic washing water and the basic washing water are associated in order to neutralise them, giving sodium sulphate and sodium chloride.

5. A method for treating metallurgical residues according to claim 4, **characterised in that** the sodium sulphate solution is attacked with calcium chloride in order to form gypsum and water containing salts.

6. A method for treating metallurgical residues according to claim 5, **characterised in that** the water containing salts is subjected to evaporation so as to generate clean water returned to the head of the process and salts.
